# EUROPEAN PATENT SPECIFICATION

(11) **EP 1 352 533 B1**
(45) Date of publication and mention of the grant of the patent: **09.09.2015**
(21) Application number: 02708286.6
(22) Date of filing: 15.01.2002
(51) Int. Cl.: H04W 28/08

(54) **INTERCONNECTING CORE NETWORK NODES IN A TELECOMMUNICATION NETWORK**
VERKNÜPFUNG VON KERNNETZKNOTEN IN EINEM TELEKOMMUNIKATIONSNETZWERK
GESTION D'UN RESEAU DE TELECOMMUNICATIONS

(30) Priority: 15.01.2001 EP 01100848
(43) Date of publication of application: 15.10.2003
(73) Proprietor: Telefonaktiebolaget LM Ericsson (publ), 164 83 Stockholm (SE)
(72) Inventor: LESCHINSKI, Ulrich, 52078 Aachen (DE); STÜMPERT, Martin, 67691 Hochspeyer (DE)
(74) Representative: Tonscheidt, Andreas
(86) International application number: PCT/EP2002/000335
(87) International publication number: WO 2002/056617

(56) References cited:
- WO-A-99/35800
- US-A- 6 091 953
- ETSI: "TS 125 413 Universal Mobile Telecommunications System (UMTS);UTRAN Iu Interface RANAP Signalling (3G TS 25.413 Version 3.0.0 Release 1999)" ETSI TS 125 413 V3.0.0, XX, XX, January 2000 (2000-01), pages 1-147, XP002165163 cited in the application
- NOKIA: "Introducing flexibility to the Iu interface", 3GPP DRAFT; R3-002586_IUFLEXIBILITY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Windsor, UK; 20001012, 12 October 2000 (2000-10-12), XP050148134, [retrieved on 2000-10-12]

## Description

### Field of invention

The invention relates to a method for controlling connections in a telecommunication network, a telecommunication network to perform that method, related methods for controlling a core network node, and related methods for controlling a radio access network node.

### Description of prior art

A telecommunication network for mobile communication comprises a radio access network that controls the assignment of radio channels and a core network that is in charge of calls, controls the mobility management of subscribers and interconnects radio access network nodes of the radio access network.

According to the state of the art a hierarchical relation exists between the core network nodes of the core network and the radio access network. Each core network node is related to one or more radio access network nodes and each radio access network node is related to one core network node. A core network node can address a related radio access network using a local identification of the radio access network node. As only one core network node is related to each radio access network node, there is no need for a radio access network node to identify the related core network node.

If the hierarchical relation between core network nodes and radio access network nodes is broken up, so that a plurality of radio access network nodes can be contacted by a plurality of core network nodes, there is no method known how a radio access network node can address a core network node, and there is no method known, how a core network node can address each radio access network node in the telecommunication network.

Document TSGR3#16(00)2586 "Introducing flexibility to the Iu Interface" from TSG-RAN Working Group 3, meeting #16, Agenda Item 12a) from 16-20 October 2000 discloses an example scenario of an IP network which connects SGSNs and RNCs as a one-to-many relation between the RNC and the CN elements (RNC to many CN elements).

Therefore it is object of the invention to provide method for addressing a radio access network node from a core network node and a method for addressing a core network node from a radio access network node in a telecommunication network that has no hierarchical relation between core network nodes and radio access network nodes.

### Summary of the invention

This object is achieved by the methods of claim land the telecommunication system of claim 4. It is an advantage of the proposed method that the terminal can roam in the telecommunication system during a call and remain connected to only one core network node. This saves network internal traffic, as the dataset related to the terminal that is stored in the core network node does not need to be transferred to a further core network node.

Advantageous embodiments are described in dependent claims.

Further advantageous is a method wherein the mobile services switching centre identification is used as identification of the core network node according to claim 2. The mobile services switching centre identification is an identification of a core network node that is already used in existing networks, and that can be implemented easily.

Further advantageous is a method wherein the message is indicating that in the sending node a failure has occurred that resulted in a loss of transaction reference information. By this the references related to the connections to the sending node can be reassigned.

Further advantageous is a method wherein the message is indicating that in the sending node a connection has failed. This is advantageous, as the references and resources related to the connections can be reassigned.

Further advantageous is a method wherein the core network node is a mobile services switching centre. This is advantageous as identifications for mobile services switching centres, which are unique identifications within the network are already used and can be implemented easily.

Further advantageous is a method wherein the radio access network node is a radio network controller according to claim 3. This is advantageous as identifications for radio access network nodes, which are unique identifications within the network, are already used and can be implemented easily.

### Brief description of the drawings

The following figures show:
- Fig. 1:: depicts a core network node, a radio access network node and messages that are transmitted between the core network node and the radio access network node according to the invention.
- Fig. 2: depicts a core network, a radio access network and a terminal that is connected to the radio access network.

### Detailed description of embodiments

In the following the invention is described in more detail by means of embodiments and figures. Equal reference signs indicate equal elements.

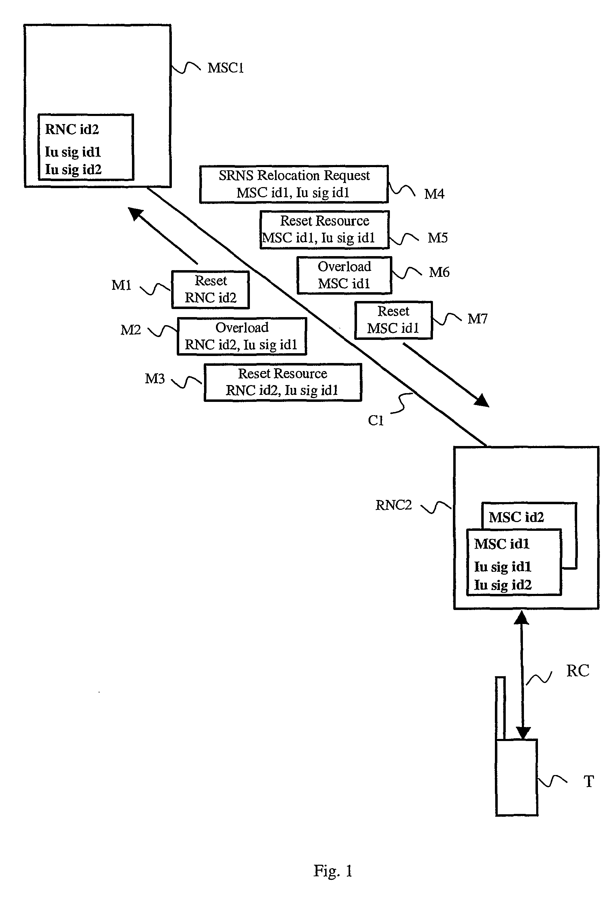

Figure 1 depicts a core network node MSC1 that is connected to a radio access network node RNC2 and messages M1, M2, M3, M4, M5, M6, M7 that are transmitted between the core network node MSC1 and the radio access network node RNC2. Figure 1 further depicts a terminal T that is connected to the radio access network node RNC2 via a radio connection RC and a connection C1 between the radio access network node RNC2 and the core network node MSC1 for the terminal T.

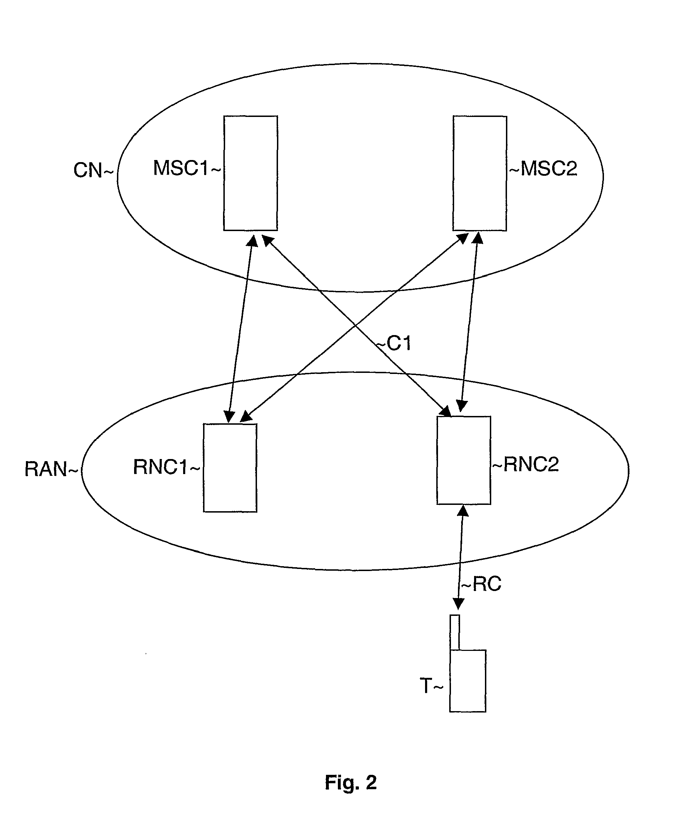

Figure 2 depicts a core network CN comprising the core network nodes MSC1 and MSC2, a radio access network RAN comprising the radio access network nodes RNC1 and RNC2, wherein the core network node MSC1 is connectable to the radio access network nodes RNC1 and RNC2 and the core network node MSC2 is connectable to the radio access network nodes RNC1 and RNC2 via an interface connecting the core network CN and the radio access network RAN. Figure 2 further depicts a terminal T that is connected to the radio access network node RNC2 via a radio connection RC and a connection C1 between the radio access network node RNC2 and the core network node MSC1 for the terminal T.

The terminal T is roaming in the coverage area of a telecommunication network that comprises the core network CN and the radio access network RAN. The telecommunication network can be for example a GPRS (General Packet Radio Service) network or UMTS (Universal Mobile Telecommunication System) network. The core network node MSC1 can be for example a MSC (mobile services switching centre) and the radio access network node RNC2 can be a RNC (radio network controller). The mobile station is visiting a subarea of the coverage area of the telecommunication network that is administrated by the radio access network node RNC1. The radio access network node RNC1 is in charge of a radio connection to the terminal T and the radio access network node RNC1 is terminating the interface between the radio access network and the core network for the terminal T. The interface between the radio access network and the core network CN can be for example an Iu interface. The mobile station is entering a subarea of the coverage area of the telecommunication system that is administrated by the radio access network node RNC2. According to radio measurements that are performed on the radio connection between the radio access network RAN and the terminal T, the radio access network node RNC1 determines the radio access network node RNC2 as new radio access network node that is in charge of a connection RC between the terminal T and the radio access network RAN. The core network node MSC1 sends a relocation request message M4 over the interface towards the radio access network node RNC2 that indicates that the radio access network node RNC2 has been selected as new radio access network node that is in charge of a connection RC to the terminal T. The message M4 comprises an identification of the connection C1 for the terminal between the core network node MSC1 and the radio access network node RNC2 over the interface and an identification of the core network node MSC1 from which the core network node MSC1 is identifiable within the telecommunication network. The identification of the core network node MSC1 is unique within the telecommunication network. The unique identification of the core network node MSC1 can be a global title, for example an MSC id (mobile services switching centre identification), for identifying the core network node on the level of the SCCP (Signalling Connection Control Part) protocol according to the 3G TS 25.410, (Version 3.3.0, published December 2000) of the 3rd Generation Partnership project or an mobile services switching centre address for identifying the core network node on the level of the RANAP (Radio Access Network Application Part) protocol according to the TS 25.413, (Version 3.4.0, published December 2000) of the 3rd Generation Partnership project. The identification of the connection can be for example an Iu connection identifier according to the TS 25.413, (Version 3.4.0, published December 2000) of the 3rd Generation Partnership project. The identification of the core network node MSC1 and the identification of the connection C1 are stored by the radio access network node RNC2.

The identification of the core network node MSC1 can be used by the radio access network node RNC2 to address the core network node MSC1 e.g. if a failure in the radio access network node has occurred that resulted in a loss of transaction reference information. To indicate such a failure, the radio access network node RNC2 sends a RESET message M1 to the core network node MSC1, the RESET message comprising an identification of the radio access network node RNC2, the identification of the radio access network node RNC2 being unique within the telecommunication network. The unique identification of the radio access network node can be a global title, for example a RNC id (radio network controller identification), for identifying the radio access network node on the level of the SCCP (Signalling Connection Control Part) protocol according to the 3G TS 25.410, (Version 3.4.0, published December 2000) of the 3rd Generation Partnership project. The core network node MSC1 analyses the identification of the radio access network node RNC2 and releases the connections to the radio access network node RNC2 and the references related to the connections.

If in core network node MSC1 a failure has occurred that resulted in a loss of transaction reference information, the core network node MSC1 addresses the radio access network node RNC2 using the identification of the radio access network node that is a unique identification within the telecommunication network. To indicate the failure the core network node MSC1 sends a RESET message M7 to the radio access network node RNC2, the message M7 comprising an identification of the core network node MSC1. The radio access network node RNC2 analyses the identification of the core network node and releases the connections to the core network node MSC1 and the radio connections and references that are related to the connections to the core network node MSC1.

If in the radio access network node RNC2 the connection C1 to the core network node MSC1 has failed, the radio access network node uses the identification of the core network node MSC1 to address the core network node MSC1. To indicate the connection failure the radio access network node RNC2 sends a RESET RESOURCE message M3 to the core network node MSC1, the message M3 comprising an identification of the radio access network node RNC2, which is a unique identification within the network, and an identification of the connection C1. The core network node MSC1 analyses the identification of the connection C1 and the identification of the radio access network node RNC2 and releases the connection C1 and the references and resources related to the connection.

If in the core network node MSC1 the connection C1 has failed, the core network node MSC1 addresses the radio access network node RNC2 using the identification of the radio access network node RNC2 that is a unique identification within the telecommunication network. To indicate the connection failure the core network node sends a RESET RESOURCE message M5 to the radio access network node RNC2, the message M5 comprising an identification of the core network node MSC1, which is a unique identification within the network, and an identification of the connection C1. The radio access network node RNC2 analyses the identification of the core network node CN1 and the identification of the connection C1 and releases the connection C1, the radio connection RC that is related to the connection C1, and the references and the resources that are related to the connection C1.

If the radio access network node RNC2 is overloaded with traffic, the radio access network node uses the identification of the core network node MSC1 to address the core network node MSC1. To indicate that the traffic at the radio access network node RNC1 should be reduced, the radio access network node RNC2 sends an OVERLOAD message M2 to the core network node MSC1, the message M2 comprising an identification of the radio access network node RNC2. The core network node MSC1 analyses the identification of the radio access network node RNC2 and reduces the traffic to radio access network node RNC2.

If the core network node MSC1 is overloaded with traffic, the core network node MSC1 addresses the radio access network node RNC2 using the identification of the radio access network node RNC2 that is a unique identification within the telecommunication network. To indicate that the traffic at the core network node MSC1 should be reduced, the core network node MSC1 sends an OVERLOAD message M6 to the radio access network node RNC2, the OVERLOAD message M6 comprising an identification of the core network node MSC1. The radio access network node RNC2 analyses the identification of the core network node MSC1 and reduces the traffic to the core network node MSC1.

In an embodiment the radio access network node can terminate the interface between core network and the radio access network node for the terminal T.

The invention further relates to a computer program that is adapted to control a core network node or a radio access network node in way that the node performs at least one of the methods as described above.

## Claims

1. Method for controlling a telecommunication network that comprises a core network (CN) with at least two core network nodes (MSC1; MSC2), a radio access network (RAN) with at least two radio access network nodes (RNC1; RNC2), and an interface for connecting the core network (CN) and the radio access network (RAN),
- wherein the core network node (MSC1; MSC2) is a mobile services switching centre, and
- wherein a core network node is connectable to at least two radio access network nodes of the radio access network via the interface and a radio access network node is connectable to at least two core network nodes of the core network via the interface, and
- wherein a message (M4) is sent from a core network node (MSC1) to a radio access network node (RNC2) over the interface, the message comprising an identification of the sending core network node (MSC1),
- wherein the identification is unique within the telecommunication network, identifying the core network node (MSC1) on the level of the Radio Access Network Application Part, RANAP, protocol, and
- wherein the message (M4) is indicating that the radio access network node (RNC2) is selected as radio access network node that is in charge of a connection (RC) between a terminal (T) and the radio access network (RAN),
- wherein the message comprises an identification of a connection (C1) for the terminal (T) between the core network (CN) and the radio access network (RAN) over the interface, wherein the identification of the connection (C1) is an Iu connection identifier, and
- wherein the radio access network node (RNC2) stores the identification of the core network node (MSC1) and the identification of the connection (C1) for the terminal between the core network (CN) and the radio access network (RAN) over the interface,
- wherein a further message (M1; M7) is sent from the core network node (MSC1) to the radio access network node (RNC2) over the interface, and
- wherein the further message (M7) is indicating that in the sending core network node (MSC1) a failure has occurred that resulted in a loss of transaction reference information,
- the further message comprising the identification of the core network node, and
- wherein the radio access network node (RNC2) analyses the identification of the core network node (MSC1) and releases the connection (C1) for the terminal between the core network (CN) and the radio access network (RAN) over the interface.

2. Method according to claim 1, wherein a mobile services switching center identification is used as identification of the core network node (MSC1).

3. Method according to any of the claims 1 or 2, wherein the radio access network node (RNC1; RNC2) is a radio network controller.

4. Telecommunication network comprising a core network (CN) with at least two core network nodes (MSC1; MSC2), a radio access network (RAN) with at least two radio access network nodes (RNC1; RNC2), and an interface for connecting the core network (CN) and the radio access network (RAN),
- wherein the core network node (MSC1; MSC2) is a mobile services switching centre, and
- wherein a core network node is connectable to at least two radio access network nodes of the radio access network via the interface, a radio access network node is connectable to at least two core network nodes of the core network via the interface,
- the interface is adapted to transmit a message (M4) from a core network node (MSC1) to a radio access network node (RNC2),
- the message comprising an identification of the sending core network node (MSC1),
- wherein the identification is unique within the telecommunication network, identifying the core network node (MSC1) on the level of the Radio Access Network Application Part, RANAP, protocol, and
- wherein the message (M4) is indicating that the radio access network node (RNC2) is selected as radio access network node that is in charge of a connection (RC) between a terminal (T) and the radio access network (RAN),
- wherein the message comprises an identification of a connection (C1) for the terminal (T) between the core network (CN) and the radio access network (RAN) over the interface,
- wherein the radio access network node (RNC2) is adapted to store the identification of the core network node (MSC1) and the identification of the connection (C1) for the terminal between the core network (CN) and the radio access network (RAN) over the interface,
- wherein the radio access network node is further adapted to receive a further message (M7) from the core network node (MSC1) (RNC2) via the interface,
- wherein the further message (M1; M7) is indicating that in the sending core network node (MSC1) a failure has occurred that resulted in a loss of transaction reference information,
- the further message comprising the identification of the core network node, and
- wherein the radio access network node is adapted to (RNC2) analyse the identification of the core network node (MSC1) and to release the connection (C1) for the terminal between the core network (CN) and the radio access network (RAN) over the interface.

5. Computer program for controlling a radio access network node (RNC1; RNC2) that is adapted to control the radio access network node (RNC1; RNC2) comprising computer program code means adapted to perform the steps of the method of any of the claims 1 to 3 when run on a computer.

## Patentansprüche

1. Verfahren zur Steuerung eines Telekommunikationsnetzes, das ein Kernnetz (CN) mit mindestens zwei Kernnetzknoten (MSC1; MSC2), ein Funkzugangsnetz (RAN) mit mindestens zwei Funkzugangsnetzknoten (RNC1; RNC2) und eine Schnittstelle zum Verbinden des Kernnetzes (CN) und des Funkzugangsnetzes (RAN) umfasst,
- wobei der Kernnetzknoten (MSC1; MSC2) eine Mobilfunkvermittlungsstelle (Mobile service Switching Center) ist, und
- wobei ein Kernnetzknoten über die Schnittstelle mit mindestens zwei Funkzugangsnetzknoten des Funkzugangsnetzes verbindbar ist, und ein Funkzugangsnetzkoten über die Schnittstelle mit mindestens zwei Kernnetzknoten verbindbar ist, und
- wobei eine Nachricht (M4) von einem Kernnetzknoten (MSC1) über die Schnittstelle an einen Funkzugangsnetzknoten (RNC2) gesendet wird, wobei die Nachricht eine Identifikation des sendenden Kernnetzknotens (MSC1) umfasst,
- wobei die Identifikation innerhalb des Telekommunikationsnetzes eindeutig ist und den Kernnetzknoten (MSC1) auf der Ebene des Funkzugangsnetz-Anwendungsteil (Radio Access Network Application Part), RANAP,-Protokolls identifiziert, und
- wobei die Nachricht (M4) angibt, dass der Funkzugangsnetzknoten (RNC2) als Funkzugangsknoten ausgewählt ist, der für eine Verbindung (RC) zwischen einem Endgerät (T) und dem Funkzugangsnetz (RAN) verantwortlich ist,
- wobei die Nachricht eine Identifikation einer Verbindung (C1) für das Endgerät (T) zwischen dem Kernnetz (CN) und dem Funkzugangsnetz (RAN) über die Schnittstelle umfasst, wobei die Identifikation der Verbindung (C1) eine Iu-Verbindungskennung ist, und
- wobei der Funkzugangsnetzknoten (RNC2) die Identifikation des Kernnetzknotens (MSC1) und die Identifikation der Verbindung (C1) für das Endgerät zwischen dem Kernnetz (CN) und dem Funkzugangsnetz (RAN) über die Schnittstelle speichert,
- wobei eine weitere Nachricht (M1; M7) vom Kernnetzknoten (MSC1) über die Schnittstelle an den Funkzugangsnetzknoten (RNC2) gesendet wird, und
- wobei die weitere Nachricht (M7) angibt, dass im sendenden Kernnetzknoten (MSC1) ein Ausfall eingetreten ist, der zu einem Verlust von Transaktionsreferenzinformationen geführt hat,
- die weitere Nachricht die Identifikation des Kernnetzknotens umfasst, und
- wobei der Funkzugangsnetzknoten (RNC2) die Identifikation des Kernnetzknotens (MSC1) analysiert und die Verbindung (C1) für das Endgerät zwischen dem Kernnetz (CN) und dem Funkzugangsnetz (RAN) über die Schnittstelle freigibt.

2. Verfahren nach Anspruch 1, wobei eine Mobilfunkvermittlungsstellen-Identifikation als Identifikation des Kernnetzknotens (MSC1) verwendet wird.

3. Verfahren nach einem der Ansprüche 1 oder 2, wobei der Funkzugangsnetzknoten (RNC1; RNC2) eine Funknetzsteuerung ist.

4. Telekommunikationsnetz, umfassend ein Kernnetz (CN) mit mindestens zwei Kernnetzknoten (MSC1; MSC2), ein Funkzugangsnetz (RAN) mit mindestens zwei Funkzugangsnetzknoten (RNC1; RNC2) und eine Schnittstelle zum Verbinden des Kernnetzes (CN) und des Funkzugangsnetzes (RAN),
- wobei der Kernnetzknoten (MSC1; MSC2) eine Mobilfunkvermittlungsstelle (Mobile service Switching Center) ist, und
- wobei ein Kernnetzknoten über die Schnittstelle mit mindestens zwei Funkzugangsnetzknoten des Funkzugangsnetzes verbindbar ist, ein Funkzugangsnetzkoten über die Schnittstelle mit mindestens zwei Kernnetzknoten verbindbar ist,
- die Schnittstelle so ausgelegt ist, dass sie eine Nachricht (M4) von einem Kernnetzknoten (MSC1) an einen Funkzugangsnetzknoten (RNC2) sendet,
- die Nachricht eine Identifikation des sendenden Kernnetzknotens (MSC1) umfasst,
- wobei die Identifikation innerhalb des Telekommunikationsnetzes eindeutig ist und den Kernnetzknoten (MSC1) auf der Ebene des Funkzugangsnetz-Anwendungsteil (Radio Access Network Application Part), RANAP,-Protokolls identifiziert, und
- wobei die Nachricht (M4) angibt, dass der Funkzugangsnetzknoten (RNC2) als Funkzugangsknoten ausgewählt ist, der für eine Verbindung (RC) zwischen einem Endgerät (T) und dem Funkzugangsnetz (RAN) verantwortlich ist,
- wobei die Nachricht eine Identifikation einer Verbindung (C1) für das Endgerät (T) zwischen dem Kernnetz (CN) und dem Funkzugangsnetz (RAN) über die Schnittstelle umfasst, und
- wobei der Funkzugangsnetzknoten (RNC2) so ausgelegt ist, dass er die Identifikation des Kernnetzknotens (MSC1) und die Identifikation der Verbindung (C1) für das Endgerät zwischen dem Kernnetz (CN) und dem Funkzugangsnetz (RAN) über die Schnittstelle speichert,
- wobei der Funkzugangsnetzknoten ferner so ausgelegt ist, dass er eine weitere Nachricht (M7) vom Kernnetzknoten (MSC1) (RNC2) über die Schnittstelle empfängt,
- wobei die weitere Nachricht (M1; M7) angibt, dass im sendenden Kernnetzknoten (MSC1) ein Ausfall eingetreten ist, der zu einem Verlust von Transaktionsreferenzinformationen geführt hat,
- die weitere Nachricht die Identifikation des Kernnetzknotens umfasst, und
- wobei der Funkzugangsnetzknoten (RNC2) so ausgelegt ist, dass er die Identifikation des Kernnetzknotens (MSC1) analysiert und die Verbindung (C1) für das Endgerät zwischen dem Kernnetz (CN) und dem Funkzugangsnetz (RAN) über die Schnittstelle freigibt.

5. Computerprogramm zum Steuern eines Funkzugangsnetzknotens (RNC1; RNC2), das so ausgelegt ist, dass es den Funkzugangsnetzknoten (RNC1; RNC2) steuert und Computerprogramm-Codemittel umfasst, die zum Ausführen der Schritte des Verfahrens nach einem der Ansprüche 1 bis 3 ausgelegt sind, wenn auf einem Computer ausgeführt.

## Revendications

1. Procédé de commande d'un réseau de télécommunications qui comprend un réseau central (CN) avec au moins deux noeuds de réseau central (MSC1; MSC2), un réseau d'accès radio (RAN) avec au moins deux noeuds de réseau d'accès radio (RNC1; RNC2) et une interface pour connecter le réseau central (CN) et le réseau d'accès radio (RAN),
- dans lequel le noeud de réseau central (MSC1; MSC2) est un centre de commutation pour les services mobiles (Mobile service Switching Centre) et
- dans lequel un noeud de réseau central peut être connecté à au moins de noeud de réseau d'accès radio du réseau d'accès radio via l'interface et un noeud de réseau d'accès radio peut être connecté à au moins deux noeuds de réseau central du réseau central via l'interface et
- dans lequel un message (M4) est envoyé d'un noeud de réseau central (MSC1) à un noeud de réseau d'accès radio (RNC2) via l'interface, le message comprenant une identification du noeud de réseau central d'envoi (MSC1),
- dans lequel l'identification est unique à l'intérieur du réseau de télécommunications, identifiant le noeud de réseau central (MSC1) sur le niveau de protocole de sous-système d'application de réseau d'accès radio (Radio Access Network Application Part), RANAP, et
- dans lequel le message (M4) indique que le noeud de réseau d'accès radio (RNC2) est sélectionné comme un noeud de réseau d'accès radio qui est en charge une connexion (RC) entre un terminal (T)et le réseau d'accès radio (RAN),
- dans lequel le message comprend une identification d'une connexion (C1) pour le terminal (T) entre le réseau central (CN) et le réseau d'accès radio (RAN) via l'interface, dans lequel l'identification de la connexion (C1) est un identifiant de connexion lu et
- dans lequel le noeud de réseau d'accès radio (RNC2) mémorise identification du noeud de réseau central (MSC1) et l'identification de la connexion (C1) pour le terminal entre le réseau central (CN) et le réseau d'accès radio (RAN) via l'interface,
- dans lequel un message supplémentaire (M1; M7) es d't envoyé du noeud de réseau central (MSC1) au noeud de réseau d'accès radio (RNC2) via l'interface et
- dans lequel le message supplémentaire (M7) indique que dans le noeud de réseau central d'envoi (MSC1) une panne s'est produite qui a entraîné une perte d'information de référence de transaction,
- le message supplémentaire comprenant l'identification du noeud de réseau central et
- dans lequel le noeud de réseau d'accès radio (RNC2) analyse l'identification du noeud de réseau central et libère la connexion pour le terminal entre le réseau central (CN)et le réseau d'accès radio (RAN) via l'interface.

2. Procédé selon la revendication 1, dans lequel une identification de centre de commutation pour les services mobiles est utilisée comme identification du noeud de réseau central (MSC1).

3. Procédé selon une quelconque des revendications 1 ou 2, dans lequel le noeud de réseau d'accès radio (RNC1; RNC2) est un contrôleur de réseau radio.

4. Réseau de télécommunications comprenant un réseau central (CN) avec au moins deux noeuds de réseau central (MSC1; MSC2), un réseau d'accès radio (RAN) avec au moins deux noeuds de réseau d'accès radio (RNC1; RNC2) et une interface pour connecter le réseau central (CN) et le réseau d'accès radio (RAN),
- dans lequel le noeud de réseau central (MSC1; MSC2) est un centre de commutation pour les services mobiles (Mobile service Switching Centre) et
- dans lequel un noeud de réseau central peut être connecté à au moins de noeud de réseau d'accès radio du réseau d'accès radio via l'interface et un noeud de réseau d'accès radio peut être connecté à au moins deux noeuds de réseau central du réseau central via l'interface et
- l'interface est adaptée pour transmettre un message (M4) d'un noeud de réseau central (MSC1) à un noeud de réseau d'accès radio (RNC2)
- le message comprenant une identification du noeud de réseau central d'envoi (MSC1),
- dans lequel l'identification est unique à l'intérieur du réseau de télécommunications, identifiant le noeud de réseau central (MSC1) sur le niveau de protocole de sous-système d'application de réseau d'accès radio (Radio Access Network Application Part), RANAP, et
- dans lequel le message (M4) indique que le noeud de réseau d'accès radio (RNC2) est sélectionné comme un noeud de réseau d'accès radio qui est en charge une connexion (RC) entre un terminal (T)et le réseau d'accès radio (RAN),
- dans lequel le message comprend une identification d'une connexion (C1) pour le terminal (T) entre le réseau central (CN) et le réseau d'accès radio (RAN) via l'interface,
- dans lequel le noeud de réseau d'accès radio (RNC2) est adapté pour mémoriser l'identification du noeud de réseau central (MSC1) et l'identification de la connexion (C1) pour le terminal entre le réseau central (CN) et le réseau d'accès radio (RAN) via l'interface,
- dans lequel le noeud de réseau d' accès radio est en outre adapté pour recevoir un message supplémentaire (M1; M7) depuis le noeud de réseau central (MSC1; RNC2) via l'interface et
- dans lequel le message supplémentaire (M7) indique que dans le noeud de réseau central d'envoi (MSC1) une panne s'est produite qui a entraîné une perte d'information de référence de transaction,
- le message supplémentaire comprenant l'identification du noeud de réseau central et
- dans lequel le noeud de réseau d'accès radio (RNC2) analyse l'identification du noeud de réseau central et libère la connexion pour le terminal entre le réseau central (CN)et le réseau d'accès radio (RAN) via l'interface.

5. Programme informatique pour commander un noeud de réseau d'accès radio (RNC1; RNC2) qui est adapté pour commander le noeud de réseau d'accès radio (RNC1; RNC2) comprenant des moyens de code de programme informatique adaptés pour mettre en oeuvre une quelconque des revendications 1 à 3 quand il est exécuté sur un ordinateur.
